(19) Europäisches Patentamt
European Patent Office
Office européen des brevets

(11) **EP 2 589 251 B1**

(12) **FASCICULE DE BREVET EUROPEEN**

(45) Date de publication et mention de la délivrance du brevet:
**09.04.2014 Bulletin 2014/15**

(51) Int Cl.:
***H04W 72/04*** *(2009.01)*

(21) Numéro de dépôt: **11737993.3**

(22) Date de dépôt: **20.06.2011**

(86) Numéro de dépôt international:
**PCT/FR2011/051412**

(87) Numéro de publication internationale:
**WO 2012/001265 (05.01.2012 Gazette 2012/01)**

(54) **PROCEDE D'ALLOCATION DE RESSOURCES A DES TERMINAUX MOBILES**

VERFAHREN FÜR DIE ZUWEISUNG VON RESSOURCEN AN MOBILE ENDGERÄTE

METHOD OF ALLOCATING RESOURCES TO MOBILE TERMINALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2010 FR 1002743**

(43) Date de publication de la demande:
**08.05.2013 Bulletin 2013/19**

(73) Titulaire: **Orange**
**75015 Paris (FR)**

(72) Inventeurs:
• **PHAN HUY, Dinh Thuy**
**F-75004 Paris (FR)**
• **AVEROUS, Hélène**
**F-92130 Issy Les Moulineaux (FR)**

(56) Documents cités:
**EP-A1- 1 708 523    EP-A1- 1 845 746**

• **"Cell level rate control and Autonomous transmission with rate ramping", 3GPP TSG-RAN WORKING GROUP 1 RELEASE 6 AD-HOC; 20040621 - 20040624, 21 juin 2004 (2004-06-21), - 24 juin 2004 (2004-06-24), XP008087242,**

## Description

L'invention concerne les réseaux cellulaires. Elle est particulièrement avantageuse dans les réseaux de type W-CDMA (initiales des mots anglais « *Wideband Code Division Multiple Access* » signifiant Multiplexage par Code Large Bande), par exemple l'UMTS (initiales des mots anglais « *Universal Mobile Telecommunications System* » signifiant Système Universel pour les Télécommunications Mobiles) ou le HSUPA (initiales des mots anglais « *High Speed Uplink Packet Access* » signifiant Accès à Grande Vitesse pour Paquets Montants), ainsi que dans les réseaux de type LTE (initiales des mots anglais « *Long Term Evolution* » signifiant Évolution sur le Long Terme) dans leur version « avancée » (« *advanced* » en anglais).

L'invention concerne plus précisément les transmissions dans la voie montante (« *uplink* » en anglais), c'est-à-dire depuis les terminaux vers la station de base, dans un réseau cellulaire admettant des liens radio à Qualité de Service (« *Quality of Service* » ou QoS en anglais) fixe ou élastique (dans le cadre de la présente invention, on parlera de liens « hétérogènes »). On rappelle à cet égard que les liens à QoS fixe, tels que la « Voix sur IP », ou les signaux de contrôle de session, sont des liens dans lesquels les données doivent être acheminées sans retard, c'est-à-dire avec une forte contrainte de délai et un débit constant, alors que les liens à QoS élastique, tels que le protocole de transfert de fichiers FTP (« *File Transfer Protocol* ») ou la navigation sur le Web, sont des liens dans lesquels les données sont acheminées sans contrainte de délai ni de débit, en fonction des capacités du réseau au moment de la transmission. Plus précisément, un lien à QoS fixe est considéré « en couverture » si les données sont acheminées sans retard, et « hors couverture » dans le cas contraire.

L'invention vise l'optimisation de la « capacité cellulaire », c'est-à-dire qu'elle a un double objectif consistant à garantir que tous les liens à QoS fixe soient en couverture, et que le débit total (mesuré, par exemple, en Mbit/s) des liens à QoS élastique soit maximal.

Dans ce contexte, une autre grandeur utile est la « charge » d'une cellule, qui est habituellement définie selon la formule suivante :

$$\text{charge} = 1 - \frac{1}{RoT},$$

où le paramètre *RoT* (initiales des mots anglais « *Rise over Thermal Noise* » signifiant Marge au-dessus du Bruit Thermique) est le rapport entre la puissance totale reçue par la station de base (toutes sources confondues), et la partie de cette puissance due uniquement au bruit thermique. La « charge », ainsi définie, est donc comprise entre 0 et 1.

Sur la voie montante, les réseaux sans-fil doivent faire face à des interférences dues à des terminaux opérant dans la même bande de fréquences. Un moyen pour réduire ce type d'interférences consiste à coordonner la puissance de transmission entre les divers terminaux. On supposera, dans le cadre de la présente invention, que, de manière connue :

- une station de base contrôle la puissance d'émission des terminaux mobiles dans sa cellule de manière à atteindre un débit total cible ;
- les liens fixes ont un débit cible fixe ; et
- les liens élastiques ont un débit variable, mais qui ne peut dépasser un débit courant maximum autorisé par la station de base.

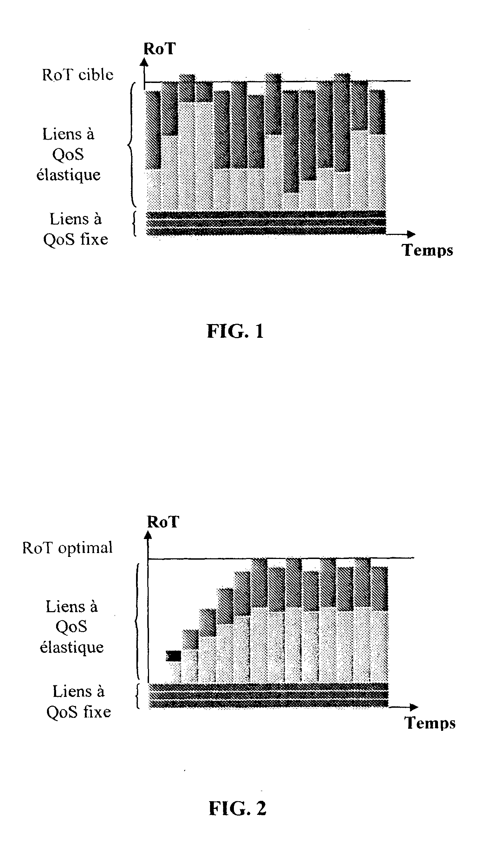

A titre d'exemple, on va considérer à présent, en référence à la figure 1, le mécanisme de contrôle de charge prévu dans le protocole HSUPA. HSUPA est un protocole de téléphonie mobile de troisième génération (3G), dont les spécifications (3GPP TR 25.896, 25.309, et 25.319) ont été publiées par le 3GPP (« *Third Generation Partnership Project* ») dans la *« release 6 »* de la norme UMTS. HSUPA est le protocole « réciproque » du protocole HSDPA (initiales des mots anglais *« High Speed Downlink Packet Access »* signifiant Accès à Grande Vitesse pour Paquets Descendants) ; HSUPA offre un débit maximum théorique dans le sens montant de 5,76 Mbit/s, le débit maximum théorique sur la voie descendante (« *downlink* » en anglais) étant de 14,4 Mbit/s en HSDPA. Ces protocoles offrent ainsi la possibilité d'échanger des contenus multimédia volumineux avec d'autres mobiles ou avec les plates-formes de partage de données sur Internet.

En HSUPA, on utilise un « ordonnanceur » (« *scheduler* » en anglais) par station de base. L'ordonnanceur a pour fonction de permettre au *RoT* d'atteindre une valeur, dite *RoT* cible, équivalente à la charge maximale de la cellule admissible sans dégradation des liens à QoS fixe. On choisit par exemple un *RoT* cible de 6 dB pour garantir la couverture des liens DCH (initiales des mots anglais « *Dedicated Channel* » signifiant Canal Dédié), et des liens vocaux selon la norme 3GPP/R99.

Comme le montre de manière schématique la figure 1, le *RoT* résulte de la somme des contributions dues à tous les liens à QoS fixe (trois sur la figure) et tous les liens à QoS élastique (deux sur la figure). L'ordonnanceur utilise des formules analytiques pour estimer et prédire le *RoT* qui sera induit par chaque lien et son débit cible associé. Plus précisément, l'ordonnanceur estime le *RoT* induit par les liens à QoS fixe ; si ce *RoT* est inférieur au *RoT* cible, l'ordonnanceur calcule les débits pouvant être alloués aux liens à QoS élastique de manière à ce que le *RoT* ne dépasse pas le *RoT* cible. Enfin, l'ordonnanceur envoie des ordres (« *grants* » en anglais) aux terminaux utilisant des liens à QoS élastique pour mettre à jour les débits cibles alloués ; pour leurs liens à QoS élastique, les terminaux transmettent alors avec des débits inférieurs ou égaux aux débits indiqués dans ces ordres donnés par la station de base. En revanche, pour leurs liens à QoS fixe, les terminaux transmettent de manière spontanée (« *Non Scheduled Transmissions* » en anglais) selon leurs besoins, conformément à la norme 3GPP TR 25.309 intitulée *« FDD Enhanced Uplink; Overall description; Stage 2 »*.

Le mécanisme d'ordonnancement que l'on vient de décrire est fondé sur des estimations peu fiables, et présente une faible réactivité, de sorte que le *RoT* effectif peut, occasionnellement, dépasser la valeur cible, comme illustré sur la figure 1. Lorsque la station de base constate un tel dépassement, elle envoie une commande appelée *« Non-Serving Relative Grant »* à un terminal (ou à plusieurs terminaux) d'une cellule voisine pour lui (leur) demander de baisser sa (leur) puissance d'émission, et donc son (leur) débit.

A propos, se pose, justement, la question de savoir comment choisir la valeur du *RoT* cible. On notera que dans les systèmes classiques, le *RoT* cible est un paramètre RRM (initiales des mots anglais *« Radio Resource Management »* signifiant Gestion des Ressources Radio), qui fait partie des données d'entrée des algorithmes de contrôle d'admission et de contrôle de charge pour chaque cellule.

En pratique, lorsqu'un réseau est déployé, la valeur du *RoT* cible n'est, habituellement, pas optimisée : on choisit la même valeur de *RoT* cible pour toutes les stations de base et pour tous les types de trafic, par exemple 4,5 dB ou 6 dB. Cette méthode de fixation du *RoT* cible est peu coûteuse, mais aussi peu efficace car non adaptative. Dans ces conditions :

- si le *RoT* cible est trop faible, on limite inutilement la capacité maximum de débit montant dans la cellule ; cela concerne à la fois le débit des liens à QoS fixe et le débit des liens à QoS élastique ;
- si au contraire le *RoT* cible est trop élevé, cela conduit à une saturation de la cellule dans le sens montant, et les interférences dues au trafic élastique excessif nuisent à la couverture du trafic à QoS fixe.

On a donc cherché à optimiser la valeur du *RoT* cible pour chaque station de base. Ainsi, l'article de J.M. Picard, H. Dubreil, F. Garabedian et Z. Altman intitulé « Dynamic Control of UMTS Networks by Load Target Tuning » (IEEE Veh. Tech. Conf., mai 2004) propose une méthode pour optimiser dynamiquement le *RoT* cible sur la base de mesures, filtrées et agrégées sur tout le réseau, des taux de blocages d'appels (« *blocking rate* » en anglais) et de rejet d'appels (« *dropping rate* » en anglais). Cette méthode, fondée sur des mesures et des statistiques d'Indicateurs de Qualité provenant de la station de base d'intérêt et des stations de base voisines, est un processus lent, qui nécessite l'acquisition de suffisamment de mesures statistiquement représentatives de la qualité courante. En raison de sa faible réactivité, cette méthode ne peut être optimale à chaque instant, car elle ne s'adapte pas de manière fine au mélange de types de trafic, de types de mobiles dans la cellule, et de types de récepteurs dans la station de base. De plus, cette méthode nécessite des équipements complexes et coûteux.

Outre les difficultés, que l'on vient de mentionner, pour déterminer le *RoT* cible, un inconvénient supplémentaire de l'utilisation d'un ordonnanceur est que l'envoi des ordres (« *grants* ») génère beaucoup de signalisation dans le réseau.

Le document EP-A1-1708523 décrit un procédé d'allocation de ressources à des terminaux mobiles dans une cellule radio, comprenant les étapes itératives suivantes :

- les terminaux $M_e$ ayant au moins un lien élastique font croître le débit sur leurs liens élastiques suivant une loi temporelle prédéterminée; et
- lorsqu'une station de base voisine constate un valeur de RoT excessif, elle envoie un commande pour baisser le maximum débit. Le document EP-A1-1845746 décrit un procédé similaire, dans lequel la station de base courant envoie ledit commande.

En résumé, cette situation est due au fait qu'il n'existe pas, dans l'état de l'art, de méthode simple, adaptative, et peu coûteuse en termes de ressources, pour optimiser la charge montante d'un réseau offrant des liens hétérogènes.

La présente invention concerne donc un procédé d'allocation de ressources à des terminaux mobiles dans une cellule radio, comprenant les étapes itératives suivantes :

a) les terminaux mobiles ayant au moins un lien élastique font croître le débit sur leurs liens élastiques suivant une loi temporelle prédéterminée ; et
b) lorsqu'un terminal mobile ayant au moins un lien fixe détecte que sa couverture sur ce lien fixe est menacée, il envoie un message d'alerte à la station de base de la cellule, ladite station de base contraignant alors lesdits terminaux mobiles ayant au moins un lien élastique à réduire temporairement leur débit sur ces liens élastiques d'une quantité prédéterminée.

Ainsi, l'invention met en oeuvre une boucle de contrôle de la couverture des liens fixes, et une loi normalisée d'expansion des liens élastiques.

Grâce à ces dispositions, on maximise automatiquement la capacité cellulaire sur la voie montante sans utiliser de contrôle du *RoT.* Il n'est ainsi, notamment, nul besoin de déterminer un *RoT* cible.

On notera que, selon l'invention, chaque terminal mobile ayant au moins un lien fixe détecte lui-même lorsque la couverture de ce lien fixe est menacée, et il en informe alors la station de base. Par contraste, dans l'art antérieur, chaque terminal mobile (quels que soient d'ailleurs les liens qu'il entretient avec la station de base) transmet à la station de base son UPH (initiales des mots anglais « *UE transmission Power Headroom* » signifiant Réserve de Puissance de transmission d'un Équipement d'Utilisateur), tel que défini dans la norme 3GPP TS 25.215 ; la station de base effectue alors un ordonnancement au moyen de ces valeurs d'UPH transmises par les terminaux, de manière à atteindre un *RoT* cible. On notera de plus que, pour constituer les messages d'alerte selon l'invention envoyés par les terminaux mobiles ayant au moins un lien fixe, on pourra utiliser une taille de message nettement moindre que celle des messages selon l'art antérieur contenant une valeur d'UPH et envoyés par tous les terminaux mobiles.

Ainsi, avantageusement, le procédé selon l'invention requiert une signalisation réduite, et il fonctionne efficacement quel que soit le type de trafic, de terminal mobile, ou de récepteur au sein d'une station de base.

Selon des caractéristiques particulières, ladite loi temporelle appliquée par un terminal ayant au moins un lien élastique est définie au moyen de débits indexés, les indices de débit étant les valeurs prises par une fonction *La(kT)* prédéterminée, où *k* est un indice temporel à valeurs entières et T désigne la périodicité d'émission de trames, ladite fonction étant croissante sur un intervalle $0 \leq k \leq k_{max}$, où $k_{max}$ est un maximum prédéterminé.

Grâce à ces dispositions, on peut commodément choisir une croissance plus ou moins rapide du débit élastique de chaque terminal ayant un lien élastique.

Selon d'autres caractéristiques particulières, un terminal mobile ayant au moins un lien fixe détecte que sa couverture sur ce lien fixe est menacée lorsque :

$$IC < IC_{min} \text{ ,}$$

où *IC* est un indicateur de couverture mesuré par ce terminal mobile, et $IC_{min}$ est une valeur minimale prédéterminée.

Grâce à ces dispositions, on peut traiter les liens fixes avec un contrôle de puissance en boucle fermée et un débit fixe.

Corrélativement, l'invention concerne divers dispositifs.

Elle concerne ainsi, premièrement, un terminal mobile. Ledit terminal mobile est remarquable en ce qu'il comprend des moyens pour :

- suite à la création d'un lien élastique entre ledit terminal mobile et une station de base d'un réseau cellulaire, recevoir de la part de ladite station de base un message normalisé de croissance de débit pour ledit lien élastique,
- recevoir de la part de ladite station de base un message de saturation, et
- suite à la réception dudit message de saturation, réduire temporairement le débit sur le lien élastique d'une quantité prédéterminée, puis faire à nouveau croître ce débit.

L'invention concerne aussi, deuxièmement, un terminal mobile. Ledit terminal mobile est remarquable en ce qu'il comprend des moyens pour :

- détecter que sa couverture sur un lien fixe qu'il entretient avec une station de base d'un réseau cellulaire est menacée, et
- suite à cette détection, envoyer un message d'alerte à ladite station de base.

Selon des caractéristiques particulières, ledit terminal mobile détecte que sa couverture sur ce lien fixe est menacée lorsque :

$$IC < IC_{min} \text{ ,}$$

où *IC* est un indicateur de couverture mesuré par ce terminal mobile, et $IC_{min}$ est un minimum prédéterminé.

L'invention concerne aussi, troisièmement, une station de base d'un réseau cellulaire. Ladite station de base est remarquable en ce qu'elle comprend des moyens pour :

- suite à la création d'un lien élastique entre elle et un terminal mobile, envoyer audit terminal mobile un message normalisé de croissance de débit pour ledit lien élastique,
- recevoir un message de perte de couverture en provenance d'un terminal ayant au moins un lien fixe, et
- suite à la réception dudit message de perte de couverture, émettre un message de saturation à destination de tous les terminaux mobiles ayant au moins un lien élastique.

Les avantages offerts par ces dispositifs sont essentiellement les mêmes que ceux offerts par les procédés corrélatifs succinctement exposés ci-dessus.

On notera qu'il est possible de réaliser les dispositifs succinctement décrits ci-dessus dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés d'allocation de ressources succinctement exposés ci-dessus, lorsqu'il est exécuté sur un ordinateur.

Les avantages offerts par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux dessins qui l'accompagnent, dans lesquels :

- la figure 1 est un graphe schématique illustrant la variation du paramètre *« Rise over Thermal »* en fonction du temps, dans les systèmes selon l'art antérieur, et
- la figure 2 est un graphe schématique illustrant la variation du paramètre *« Rise over Thermal »* en fonction du temps, dans un système selon l'invention.

Le système selon l'invention comprend une station de base donnée et les terminaux mobiles attachés à cette station de base via des liens à QoS fixe ou élastique. On notera qu'un même terminal peut éventuellement établir simultanément plusieurs liens, le cas échéant hétérogènes.

On va décrire à présent un mode de réalisation de l'invention.

Lors d'une phase de configuration du système, la station de base et les terminaux enregistrent les éléments suivants :

- une définition d'un indicateur de couverture IC destiné à être calculé par chaque terminal apte à établir un lien fixe ;
- une suite de tailles de paquets ou, de manière équivalente, une suite de débits normalisés (telle que la table appelée « E-TFC » dans la norme HSUPA, cf. par exemple http://www.3gpp.org/ftp/Specs/archive/25 series/25.321/25321-7h0.zip, Annexe B, page 134), ordonnés de manière croissante, et indexés de $j = 1$ à $j = N_{max}$, où l'indice $N_{max}$ correspond à un débit de lien élastique maximum prédéterminé pour le terminal concerné ;
- un indice temporel $k$, à valeurs entières, avec $0 \leq k \leq k_{max}$, où $k_{max}$ est un entier prédéterminé ; et
- une loi temporelle définie au moyen d'une fonction *La(kT)* prédéterminée, où T désigne la périodicité d'émission de trames, ladite fonction étant croissante sur l'intervalle $0 \leq k \leq k_{max}$, et pouvant prendre une valeur nulle ou des valeurs entières positives (ne pouvant toutefois, de préférence, dépasser $N_{max}$ puisque le terminal concerné serait dans ce cas physiquement incapable d'émettre avec un débit si élevé).

On suppose que, de manière connue, chaque terminal apte à établir un lien fixe est capable de mesurer l'affaiblissement de propagation PL des signaux échangés avec la station de base à laquelle il est attaché. On rappelle que « l'affaiblissement de propagation » (« *path loss* » en anglais) est la diminution de la densité de puissance d'une onde électromagnétique lors de sa propagation ; cette diminution peut être due à de nombreuses causes, telles que l'expansion en espace libre, la réfraction, la diffraction, la réflexion, l'absorption, les caractéristiques du paysage, ou la hauteur des antennes.

Concernant l'indicateur de couverture *IC*, on pourra le prendre, selon une première variante, égal au ratio de puissance disponible ; il sera calculé par le terminal par exemple selon la formule suivante :

$$IC = \frac{Ptx_{max}}{Ptx} \, ,$$

où *Ptx* désigne la puissance courante de transmission du mobile et *Ptx*$_{max}$ la puissance maximum de transmission du mobile. L'indicateur de couverture *IC* sert ainsi d'indicateur de la réserve de puissance disponible dans le terminal, et il permet de garantir la couverture des terminaux effectivement présents et en cours de transmission dans la cellule.

Selon une deuxième variante, on considère un autre choix de l'indicateur de couverture *IC,* et ce, afin de garantir la couverture de terminaux mobiles susceptibles d'entrer dans la cellule considérée à une date ultérieure. Dans ce cas, un terminal mobile effectivement présent et en cours de transmission dans la cellule, et dont l'affaiblissement de propagation est *PL,* tiendra compte du ratio de puissance disponible pour un utilisateur potentiel ayant un affaiblissement de propagation cible en bordure de cellule de *PL*$_{bord}$ ; il calculera alors *IC* selon la formule suivante :

$$IC = \frac{Ptx_{max}}{Ptx} \times \frac{PL}{PL_{bord}} \, .$$

Concernant la fonction *La(kT),* on pourra prendre par exemple :

- *La(kT) = E[αkT + β]* (croissance linéaire), ou
- *La(kT) = E[αlog(kT) + β]* (croissance logarithmique), ou encore
- *La(kT) = E[exp(αkT + β)]* (croissance exponentielle),

où E[...] désigne la fonction « partie entière ». On notera que la fonction *La(kT)* peut être choisie différente d'un terminal à l'autre (y compris la valeur de $k_{max}$) ; dans ce cas, le message de déclenchement (voir ci-dessous) reçu de la station de base pourra indiquer au terminal quelle fonction il doit appliquer.

Ainsi, chaque terminal prend en compte, pour chaque lien élastique établi par ce terminal :

- un indice temporel $k$ courant, qui est initialisé à 0 lors de la création de ce lien élastique, et
- l'indice $j$ du débit courant autorisé pour ce lien élastique, avec $j = La(kT)$.

Dans le présent mode de réalisation de l'invention, on applique les étapes suivantes aux terminaux mobiles desservis par une station de base donnée.

Lors d'une étape E1, dite « de déclenchement » et faisant suite à la création d'un lien élastique entre un terminal mobile $M_e$ et la station de base, cette dernière envoie au terminal $M_e$ un message normalisé de croissance du débit pour ce lien élastique. Lorsque ce terminal $M_e$ reçoit ce message, il initialise l'indice temporel $k$ à 0, et l'indice de débit $j$ à $La(kT)$.

Lors d'une étape E2, dite « d'accroissement », le terminal $M_e$ exécute à chaque nouvelle trame émise les mises à jour suivantes :

- $k = \min(k + 1, k_{max})$, et
- $j = La(kT)$.

Lors d'une étape E3, dite de « contrôle de la couverture des liens fixes », si un terminal mobile $M_f$ ayant un lien fixe constate que :

$$IC < IC_{min},$$

où $IC_{min}$ est un minimum prédéterminé pour l'indicateur de couverture, alors ce terminal $M_f$ envoie un message de perte de couverture à la station de base.

Lors d'une étape E4, dite de « protection de la couverture des liens fixes »,

 o sur réception d'un message de perte de couverture en provenance d'un terminal mobile $M_f$, la station de base émet un message de saturation à destination (au moins) de tous les terminaux ayant au moins un lien élastique ; et
 o suite à la réception de ce message de saturation, ces terminaux ayant au moins un lien élastique diminuent la valeur courante de leur indice temporel $k$ d'une quantité $\Delta k$ prédéterminée (ou prennent $k = 0$ si la valeur courante de $k$ est inférieure à $\Delta k$) ; ces terminaux reprennent ensuite le processus d'accroissement (étape E2) à partir de la nouvelle valeur d'indice temporel $k$.

Ainsi, l'invention utilise les indicateurs de couverture $IC$ des terminaux ayant (au moins) un lien fixe ; ces indicateurs reflètent les conditions concrètes réelles dans la cellule (types de terminaux, types de trafic, environnement de propagation, et ainsi de suite). Comme illustré schématiquement sur la figure 2, la mise en oeuvre de l'invention a pour résultat l'obtention automatique d'un $RoT$ optimal, et donc d'un débit montant optimal dans la cellule. Le mécanisme de couverture des liens fixes selon l'invention (étapes E3 et E4 dans le mode de réalisation décrit ci-dessus), de par sa haute réactivité, évite tout risque de saturation du réseau.

D'autres modes de réalisation de la présente invention peuvent être envisagées. Par exemple, les étapes E1 et E2 ci-dessus peuvent être remplacées par un ordonnanceur classique, à condition qu'il réalise une montée progressive de la charge de la cellule.

La mise en oeuvre de l'invention au sein des noeuds du réseau de télécommunications (plus précisément, les stations de base et les terminaux mobiles) peut être réalisée au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre du procédé d'allocation de ressources selon l'invention.

En effet, l'invention vise aussi un programme d'ordinateur téléchargeable depuis un réseau de communication comprenant des instructions pour l'exécution des étapes d'un procédé d'allocation de ressources selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter en tant que code source, code objet, ou code intermédiaire entre code source et code objet, sous une forme partiellement compilée ou sous toute autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB (« *USB flash drive* » en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution du procédé d'allocation de ressources selon l'invention.

## Revendications

**1.** Procédé d'allocation de ressources à des terminaux mobiles dans une cellule radio, comprenant les étapes itératives suivantes :

a) les terminaux mobiles $M_e$ ayant au moins un lien élastique font croître le débit sur leurs liens élastiques suivant une loi temporelle prédéterminée ; et
b) lorsqu'un terminal mobile $M_f$ ayant au moins un lien fixe détecte que sa couverture sur ce lien fixe est menacée, il envoie un message d'alerte à la station de base de la cellule, ladite station de base contraignant alors lesdits terminaux mobiles $M_e$ ayant au moins un lien élastique à réduire temporairement leur débit sur ces liens élastiques d'une quantité prédéterminée.

**2.** Procédé d'allocation de ressources selon la revendication 1, **caractérisé en ce que** ladite loi temporelle appliquée par un terminal $M_e$ ayant au moins un lien élastique est définie au moyen de débits indexés, les indices de débit étant les valeurs prises par une fonction $La(kT)$ prédéterminée, où k est un indice temporel à valeurs entières et $T$ désigne la périodicité d'émission de trames, ladite fonction étant croissante sur un intervalle $0 \leq k \leq k_{max}$, où $k_{max}$ est un maximum prédéterminé.

**3.** Procédé d'allocation de ressources selon la revendication 1 ou la revendication 2, **caractérisé en ce qu'**un terminal mobile $M_f$ ayant au moins un lien fixe détecte que sa couverture sur ce lien fixe est menacée lorsque :

$$IC < IC_{min} \, ,$$

où $IC$ est un indicateur de couverture mesuré par ce terminal mobile ( $M_f$), et $IC_{min}$ est une valeur minimale prédéterminée.

**4.** Procédé d'allocation de ressources selon la revendication 3, **caractérisé en ce que** ledit indicateur de couverture est calculé selon la formule :

$$IC = \frac{Ptx_{max}}{Ptx} \, ,$$

où $Ptx$ désigne la puissance courante de transmission du terminal mobile $M_f$ et $Ptx_{max}$ sa puissance

de transmission maximale.

**5.** Procédé d'allocation de ressources selon la revendication 3, **caractérisé en ce que** ledit indicateur de couverture est calculé selon la formule :

$$IC = \frac{Ptx_{max}}{Ptx} \times \frac{PL}{PL_{bord}} \, ,$$

où $Ptx$ désigne la puissance courante de transmission du terminal mobile $M_f$, $Ptx_{max}$ sa puissance de transmission maximale, $PL$ son affaiblissement de propagation, et $PL_{bord}$ un affaiblissement de propagation cible en bordure de cellule.

**6.** Terminal mobile $M_e$, **caractérisé en ce qu'**il comprend des moyens pour :

- suite à la création d'un lien élastique entre ledit terminal mobile $M_e$ et une station de base d'un réseau cellulaire, recevoir de la part de ladite station de base un message normalisé de croissance de débit pour ledit lien élastique,
- recevoir de la part de ladite station de base un message de saturation, et
- suite à la réception dudit message de saturation, réduire temporairement le débit sur le lien élastique d'une quantité prédéterminée, puis faire à nouveau croître ce débit.

**7.** Terminal mobile $M_f$, **caractérisé en ce qu'**il comprend des moyens pour :

- détecter que sa couverture sur un lien fixe qu'il entretient avec une station de base d'un réseau cellulaire est menacée, et
- suite à cette détection, envoyer un message d'alerte à ladite station de base.

**8.** Terminal mobile selon la revendication 7, **caractérisé en ce qu'**il détecte que sa couverture sur ce lien fixe est menacée lorsque :

$$IC < IC_{min} \, ,$$

où $IC$ est un indicateur de couverture mesuré par ce terminal mobile $M_f$, et $IC_{min}$ est un minimum prédéterminé.

**9.** Terminal mobile selon la revendication 8, **caractérisé en ce que** ledit indicateur de couverture est calculé selon la formule :

$$IC = \frac{Ptx_{\max}}{Ptx} \, ,$$

où *Ptx* désigne la puissance courante de transmission du terminal mobile $M_f$ et $Ptx_{\max}$ sa puissance de transmission maximale.

10. Terminal mobile selon la revendication 8, **caractérisé en ce que** ledit indicateur de couverture est calculé selon la formule :

$$IC = \frac{Ptx_{\max}}{Ptx} \times \frac{PL}{PL_{\mathrm{bord}}} \, ,$$

où *Ptx* désigne la puissance courante de transmission du terminal mobile $M_f$, $Ptx_{\max}$ sa puissance de transmission maximale, *PL* son affaiblissement de propagation, et $PL_{\mathrm{bord}}$ un affaiblissement de propagation cible en bordure de cellule.

11. Station de base d'un réseau cellulaire, **caractérisée en ce qu'**elle comprend des moyens pour :

- suite à la création d'un lien élastique entre elle et un terminal mobile $M_e$, envoyer audit terminal mobile $M_e$ un message normalisé de croissance de débit pour ledit lien élastique,
- recevoir un message de perte de couverture en provenance d'un terminal $M_f$ ayant au moins un lien fixe, et
- suite à la réception dudit message de perte de couverture, émettre un message de saturation à destination de tous les terminaux mobiles ayant au moins un lien élastique.

12. Moyen de stockage de données inamovible, ou partiellement ou totalement amovible, comportant des instructions de code de programme informatique pour l'exécution des étapes d'un procédé selon l'une quelconque des revendications 1 à 5.

13. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé d'allocation de ressources selon l'une quelconque des revendications 1 à 5, lorsqu'il est exécuté sur un ordinateur.

**Patentansprüche**

1. Verfahren für die Zuweisung von Ressourcen an mobile Endgeräte in einer Funkzelle, das die folgenden, sich wiederholenden Schritte aufweist:

a) die mobilen Endgeräte $\boldsymbol{M_s}$, die mindestens eine flexible Verbindung aufweisen, erhöhen die Übertragungsgeschwindigkeit auf ihren flexiblen Verbindungen gemäß einem vorbestimmten Zeitgesetz; und
b) wenn ein mobiles Endgerät $\boldsymbol{M_j}$, das mindestens eine feste Verbindung aufweist, ermittelt, dass seine Abdeckung auf dieser festen Verbindung bedroht ist, sendet es eine Warnmeldung an die Basisstation der Zelle, wobei die Basisstation dann die mobilen Endgeräte $\boldsymbol{M_s}$, die mindestens eine flexible Verbindung aufweisen, zwingt, ihre Übertragungsgeschwindigkeit auf diesen flexiblen Verbindungen zeitweilig um einen vorbestimmten Betrag zu verringern.

2. Verfahren für die Zuweisung von Ressourcen nach Anspruch 1, **dadurch gekennzeichnet, dass** das Zeitgesetz, das durch ein Endgerät $\boldsymbol{M_s}$ angewandt wird, das mindestens eine flexible Verbindung aufweist, mittels indizierter Übertragungsgeschwindigkeiten definiert ist, wobei die Übertragungsgeschwindigkeitsindizes die Werte sind, die durch eine vorbestimmte Funktion *La(kT)* angenommen werden, wo $\boldsymbol{k}$ ein Zeitindex mit ganzzahligen Werten ist und $\boldsymbol{T}$ die Periodizität der Sendung von Rahmen bezeichnet, wobei die Funktion über ein Intervall $0 \leq k \leq k_{\max}$ steigend ist, wo $k_{\max}$ ein vorbestimmtes Maximum ist.

3. Verfahren für die Zuweisung von Ressourcen nach Anspruch 1 oder Anspruch 2, **dadurch gekennzeichnet, dass** ein mobiles Endgerät $M_f$, das mindestens eine feste Verbindung aufweist, detektiert, dass seine Abdeckung auf dieser festen Verbindung bedroht ist, wenn:

$$IC < IC_{min},$$

wo $\boldsymbol{IC}$ ein Abdeckungsindikator ist, der durch dieses mobile Endgerät $M_f$ gemessen wird, und $IC_{min}$ ein vorbestimmter Mindestwert ist.

4. Verfahren für die Zuweisung von Ressourcen nach Anspruch 3, **dadurch gekennzeichnet, dass** der Abdeckungsindikator gemäß der folgenden Formel berechnet wird:

$$IC = \frac{Ptx_{max}}{Ptx},$$

wo *Ptx* die gegenwärtige Sendeleistung des mobilen Endgeräts $M_f$ und $Ptx_{max}$ seine maximale Sendeleistung bezeichnet.

5. Verfahren für die Zuweisung von Ressourcen nach Anspruch 3, **dadurch gekennzeichnet, dass** der Abdeckungsindikator gemäß der folgenden Formel berechnet wird:

$$IC - \frac{Ptx_{max}}{Ptx} \; x \; \frac{PL}{PL_{bord}},$$

wo *Ptx* die gegenwärtige Sendeleistung des mobilen Endgeräts $M_f$, $Ptx_{max}$ seine maximale Sendeleistung, *PL* sein Ausbreitungsverlust und $PL_{bord}$ ein Zielausbreitungsverlust am Zellenrand ist.

6. Mobiles Endgerät $M_s$, **dadurch gekennzeichnet, dass** es Mittel für Folgendes aufweist:

   - im Anschluss an die Herstellung einer flexiblen Verbindung zwischen dem mobilen Endgerät $M_s$ und einer Basisstation eines zellularen Netzes, Empfangen einer normalisierten Meldung über die Erhöhung der Übertragungsgeschwindigkeit für die flexible Verbindung von der Basisstation,
   - Empfangen einer Überlastungsmeldung von der Basisstation, und
   - im Anschluss an den Empfang der Überlastungsmeldung, zeitweiliges Verringern der Übertragungsgeschwindigkeit auf der flexiblen Verbindung um einen vorbestimmten Betrag und dann erneutes Erhöhen dieser Übertragungsgeschwindigkeit.

7. Mobiles Endgerät $M_f$, **dadurch gekennzeichnet, dass** es Mittel für Folgendes aufweist:

   - Ermitteln, dass seine Abdeckung auf einer festen Verbindung, die es mit einer Basisstation eines zellularen Netzes unterhält, bedroht ist, und
   - im Anschluss an diese Ermittlung, Senden einer Warnmeldung an die Basisstation.

8. Mobiles Endgerät nach Anspruch 7, **dadurch gekennzeichnet, dass** es ermittelt, dass seine Abdeckung auf dieser festen Verbindung bedroht ist, wenn:

$$IC < IC_{min},$$

wo *IC* ein Abdeckungsindikator ist, der durch dieses mobile Endgerät $M_f$ gemessen wird, und $IC_{min}$ ein vorbestimmter Mindestwert ist.

9. Mobiles Endgerät nach Anspruch 8, **dadurch gekennzeichnet, dass** der Abdeckungsindikator gemäß der folgenden Formel berechnet wird:

$$IC = \frac{Ptx_{max}}{Ptx},$$

wo *Ptx* die gegenwärtige Sendeleistung des mobilen Endgeräts $M_f$ und $Ptx_{max}$ seine maximale Sendeleistung bezeichnet.

10. Mobiles Endgerät nach Anspruch 8, **dadurch gekennzeichnet, dass** der Abdeckungsindikator gemäß der folgenden Formel berechnet wird:

$$IC = \frac{Ptx_{max}}{Ptx} \; x \; \frac{PL}{PL_{bord}},$$

wo *Ptx* die gegenwärtige Sendeleistung des mobilen Endgeräts $M_f$, $Ptx_{max}$. seine maximale Sendeleistung, *PL* sein Ausbreitungsverlust und $PL_{bord}$ ein Zielausbreitungsverlust am Zellenrand ist.

11. Basisstation eines zellularen Netzes, **dadurch gekennzeichnet, dass** sie Mittel für Folgendes aufweist:

    - im Anschluss an die Herstellung einer flexiblen Verbindung zwischen ihr und einem mobilen Endgerät $M_s$, Senden einer normalisierten Meldung über die Erhöhung der Übertragungsgeschwindigkeit für die flexible Verbindung an das mobile Endgerät $M_s$,
    - Empfangen einer Meldung über den Verlust der Abdeckung von einem Endgerät $M_f$, das mindestens eine feste Verbindung aufweist, und
    - im Anschluss an den Empfang der Meldung über den Verlust der Abdeckung, Senden einer Überlastungsmeldung an alle mobilen Endgeräte, die mindestens eine flexible Verbindung aufweisen.

12. Nicht entfernbares oder teilweise oder vollständig entfernbares Mittel zur Speicherung von Daten, das Informatikprogrammcodebefehle zur Ausführung der Schritte eines Verfahrens nach einem der Ansprüche 1 bis 5 aufweist.

13. Computerprogramm, das von einem Kommunikationsnetz heruntergeladen und/oder auf einem maschinenlesbaren Träger gespeichert werden kann und/oder durch einen Mikroprozessor ausführbar ist, **dadurch gekennzeichnet, dass** es Befehle für die Ausführung der Schritte eines Verfahrens zur Zuweisung von Ressourcen nach einem der Ansprüche 1 bis 5, wenn es auf einem Computer ausgeführt wird, aufweist.

**Claims**

1. Method for allocating resources to mobile terminals in a radio cell, comprising the following iterative steps:

   a) the mobile terminals $M_e$ having at least one elastic link increase the bitrate on their elastic links according to a predetermined temporal law; and
   b) when a mobile terminal $M_f$ having at least one fixed link detects that its coverage on this fixed link is threatened, it dispatches an alert message to the base station of the cell, said base station then constraining said mobile terminals $M_e$ having at least one elastic link to temporarily reduce their bitrate on these elastic links by a predetermined amount.

2. Method for allocating resources according to Claim 1, **characterized in that** said temporal law applied by a terminal $M_e$ having at least one elastic link is defined by means of indexed bitrates, the bitrate indices being the values taken by a predetermined function $La(kT)$, where $k$ is a temporal index with integer values and T denotes the periodicity of emission of frames, said function being increasing over an interval $0 \leq k \leq k_{max}$, where $k_{max}$ is a predetermined maximum.

3. Method for allocating resources according to Claim 1 or Claim 2, **characterized in that** a mobile terminal $M_f$ having at least one fixed link detects that its coverage on this fixed link is threatened when:

$$IC < IC_{min},$$

where $IC$ is a coverage indicator measured by this mobile terminal ($M_f$), and $IC_{min}$ is a predetermined minimum value.

4. Method for allocating resources according to Claim 3, **characterized in that** said coverage indicator is calculated according to the formula:

$$IC = \frac{Ptx_{max}}{Ptx},$$

where $Ptx$ denotes the current transmission power of the mobile terminal $M_f$ and $Ptx_{max}$ its maximum transmission power.

5. Method for allocating resources according to Claim 3, **characterized in that** said coverage indicator is calculated according to the formula:

$$IC = \frac{Ptx_{max}}{Ptx} \times \frac{PL}{PL_{bord}},$$

where $Ptx$ denotes the current transmission power of the mobile terminal $M_f$, $Ptx_{max}$ its maximum transmission power, PL its propagation decay, and **$PL_{bord}$** a target propagation decay at a cell border.

6. Mobile terminal $M_e$, **characterized in that** it comprises means for:

   - subsequent to the creation of an elastic link between said mobile terminal $M_e$ and a base station of a cellular network, receiving on the part of said base station a standardized message of bitrate increase for said elastic link,
   - receiving on the part of said base station a saturation message, and
   - subsequent to the receipt of said saturation message, temporarily reducing the bitrate on the elastic link by a predetermined amount, and then making this bitrate increase again.

7. Mobile terminal $M_f$, **characterized in that** it comprises means for:

   - detecting that its coverage on a fixed link that it sustains with a base station of a cellular network is threatened, and
   - subsequent to this detection, dispatching an alert message to said base station.

8. Mobile terminal according to Claim 7, **characterized in that** it detects that its coverage on this fixed link is threatened when:

$$IC < IC_{min},$$

where IC is a coverage indicator measured by this mobile terminal $M_f$, and $IC_{min}$ is a predetermined minimum.

9. Mobile terminal according to Claim 8, **characterized in that** said coverage indicator is calculated according to the formula:

$$IC = \frac{Ptx_{\max}}{Ptx} \ ,$$

where $Ptx$ denotes the current transmission power of the mobile terminal $M_f$ and $Ptx_{max}$ its maximum transmission power.

10. Mobile terminal according to Claim 8, **characterized in that** said coverage indicator is calculated according to the formula:

$$IC = \frac{Ptx_{\max}}{Ptx} \times \frac{PL}{PL_{\mathrm{bord}}} \ ,$$

where $Ptx$ denotes the current transmission power of the mobile terminal $M_f$, $Ptx_{max}$ its maximum transmission power, PL its propagation decay, and $PL_{bord}$ a target propagation decay at a cell border.

11. Base station of a cellular network, **characterized in that** it comprises means for:

    - subsequent to the creation of an elastic link between it and a mobile terminal $M_e$, dispatching to said mobile terminal $M_e$ a standardized message of bitrate increase for said elastic link,
    - receiving a loss of coverage message originating from a terminal $M_f$ having at least one fixed link, and
    - subsequent to the receipt of said loss of coverage message, emitting a saturation message destined for all the mobile terminals having at least one elastic link.

12. Irremovable, or partially or totally removable means for storing data, comprising computer program code instructions for the execution of the steps of a method according to any one of Claims 1 to 5.

13. Computer program downloadable from a communication network and/or stored on a medium readable by computer and/or executable by a microprocessor, **characterized in that** it comprises instructions for the execution of the steps of a method for allocating resources according to any one of Claims 1 to 5, when it is executed on a computer.

**FIG. 1**

**FIG. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1708523 A1

- EP 1845746 A1

**Littérature non-brevet citée dans la description**

- **J.M. PICARD ; H. DUBREIL ; F. GARABEDIAN ; Z. ALTMAN.** Dynamic Control of UMTS Networks by Load Target Tuning. *IEEE Veh. Tech. Conf.,* Mai 2004